Europäisches Patentamt

European Patent Office

Office européen des brevets

(19)

(11) Publication number: **0 039 380**
**B1**

(12) **EUROPEAN PATENT SPECIFICATION**

(45) Date of publication of patent specification: **20.03.85**

(21) Application number: **80303851.2**

(22) Date of filing: **29.10.80**

(51) Int. Cl.⁴: **G 01 N 1/22,** G 01 N 27/46,
B 01 D 39/20

(54) Gas sampling system.

(30) Priority: **05.05.80 US 146962**

(43) Date of publication of application:
**11.11.81 Bulletin 81/45**

(45) Publication of the grant of the patent:
**20.03.85 Bulletin 85/12**

(84) Designated Contracting States:
**DE FR GB IT**

(56) References cited:
**DE-A-2 719 138**
**DE-A-2 810 937**
**FR-A-2 182 500**
**US-A-1 755 285**
**US-A-3 960 500**

(73) Proprietor: **THE BABCOCK & WILCOX
COMPANY
1010 Common Street P.O. Box 60035
New Orleans Louisiana 70160 (US)**

(72) Inventor: **Pocock, Robert E.
1058 W. Mill Drive
Highland Heights Ohio 44148 (US)**

(74) Representative: **Cotter, Ivan John
D. YOUNG & CO. 10 Staple Inn
London WC1V 7RD (GB)**

EP 0 039 380 B1

Courier Press, Leamington Spa, England.

## Description

The present invention relates generally to gas sampling systems for analysing gases within a duct, and more particularly to a filter for a sampling probe for such a system.

US—A—3 960 500 discloses a gas sampling system for analysing gases (e.g. process gases and combustion flue gases) within a duct, the system including a probe for withdrawing a sample of gas from the duct for analysis and a filter attached to the probe and operable to filter the gas drawn into the probe, thereby to prevent particulate matter from being entrained by the probe and entering the analysis apparatus. Such a gas sampling system is referred to hereinbelow as a "gas sampling system of the type defined".

Prior art filters are generally made of a rigid material, and are thus susceptible to becoming clogged with particulate matter. While means can be provided to backflush the filter, if the particulate matter is sticky it cannot easily be dislodged by normal backflushing procedures.

Another problem associated with any form of filter which is subjected to process or combustion flue gases is that of high temperatures. Combustion gases can reach temperatures of 1649°C (3000°F) or greater, which greatly limits the materials which can be used for such a filter.

Because of this it has become desirable to develop a filter, for a gas sampling system of the type defined, which minimises the entrainment of particulate matter therein, can be backflushed to dislodge any particulate matter entrained therein, and which can be subjected to extremely high temperatures without any adverse effects.

US—A—3 928 161 discloses a gas analysing system of a different type in which the analysis apparatus is disposed within a probe in a duct and samples of gas are therefore not withdrawn from the duct. The probe is provided with a filter which is of a porous refractory material such as a ceramic material.

German Published Patent Application DE—A—2 810 937 discloses a filter element for removing solid particles from hot gases, the element being formed of a ceramic fabric comprising alumina-boria-silica filaments.

According to the present invention there is provided a gas sampling system for analysing gases within a duct, the system including a probe for withdrawing a sample of gas from the duct for analysis and a filter attached to the probe and operable to filter the gas drawn into the probe, characterised in that the filter is in the form of a filter assembly comprising an adapter attached to the probe, a tubular extension attached to the adapter and in communication with the probe, a coil spring having one end in surrounding relation to the tubular extension, and a filter element comprising a flexible sleeve that is received over the coil spring and is attached at one end to the tubular extension, the sleeve being formed of a temperature resistant ceramic material and being closed at the other end.

An embodiment of the present invention described hereinbelow solves or at least alleviates the aforementioned problems associated with the prior art by providing a flexible filter element for a gas sampling system of the type defined that is formed from a temperature resistant fabric. The flexible filter element fits over the end of a sample probe used in a gas sample analysing system. An adapter fits over the other end of the sample probe and over the end of a probe support. The filter element forms part of a filter assembly that includes a probe extension threaded into the adapter coaxially of the probe, a deflector plate welded or otherwise attached to the adapter and spaced from the probe extension towards the source of gas flow, the filter assembly enclosing the probe extension and being attached to the adapter. The filter assembly includes a coil spring received over the probe extension and a filter element in the form of an elongate closed-end sleeve or bag formed of a temperature resistant fabric, such as a continuous filament ceramic fibre, and received over the spring and secured to the probe extension. The deflector plate is substantially V-shaped in cross-section and is attached to the adapter with the legs of the V adjacent the filter assembly, and functions to prevent the gas flow from impinging directly on the filter element while ensuring that there is sufficient gas movement along the sides of the filter to set up gas currents which cause the flexible filter element to deflect or flutter in the gas flow. This fluttering movement causes the fabric comprising the filter to flex, which tends to dislodge particulate matter that becomes trapped in the fabric. When the analyser system is backflushed, the backflushing pressure causes the interstices within the fabric to open, thus dislodging any particulate matter which may not have been dislodged by the movement of the filter element during normal operation.

From the foregoing it will be seen that the preferred filter element will not tend to be clogged with particulate matter, can withstand extremely high temperatures, and can readily be backflushed to ensure complete cleaning.

The invention will now be further described, by way of illustrative and non-limiting example, with reference to the accompanying drawing, in which:

Figure 1 is a longitudinal sectional view of a probe and filter assembly of a system embodying the present invention with the components thereof shown in elevation; and

Figure 2 is an end view of the structure illustrated in Figure 1.

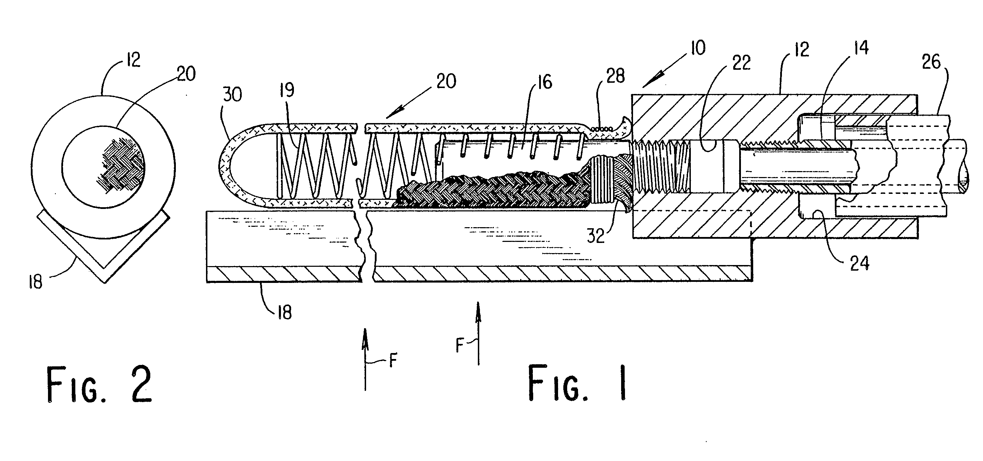

Referring now to the accompanying drawing, Figure 1 shows a filter assembly 10 capable of use with a gas sampling probe of the type illustrated in United States Patent No. 3 960 500, the probe being operative to withdraw a sample of gas from a duct and forming part of a gas sampling system for analysing gases within the duct.

The filter assembly 10 comprises a cylindrical adapter 12 which is threadably received on an

2

analyser probe 14 installed in a gas duct, a tubular probe extension 16 threaded into the adapter 12, a deflector plate 18 attached to the adapter 12, a coil spring 19 received over the probe extension 16, and a filter element 20 received over the coil spring 19 and secured to the probe extension 16.

The cylindrical adapter 12 has a through bore 22 formed therein, and an enlarged counterbore 24 formed in one end thereof. The through bore 22 is threaded at one end to receive the probe extension 16, and is similarly threaded at its opposite end for attachment to the analyser probe 14. The counterbore 24 is sized to provide clearance around a probe support member 26 of the gas sampling system. The probe extension 16 is formed of a short length of pipe which is threaded at one end for engagement with the bore 22 of the adapter 12.

The coil spring 19 has one end thereof in an interference fit with the outwardly extending end of the probe extension 16, and the flexible filter element 20 is sized to be received over the spring 19. As shown in Figure 1, the end of the filter element 20 can then be secured to the probe extension 16 by tightly wrapping it with heat resistant wire 28 or the like.

The filter element 20 is preferably, as shown, in the form of a sleeve or bag having a closed end 30 and an open end 32, the open end 32 being secured to the probe extension 16 by the wire 28. The length of the filter element 20 is greater than its diameter. The filter element 20 can be formed of a continuous filament ceramic fibre woven into a braided sleeving. Such a fibre is capable of withstanding a continuous operating temperature of 1427°C (2600°F), and an intermittent temperature of up to 1649°C (3000°F). An example of such a fibrous material is 3M Brand AB 312 continuous filament ceramic fibre, which is composed of filaments of alumina-boria-silica having a density of 2.699 g/cm$^3$ (0.0975 lb/in$^3$) and an average denier (390 filament strand) of 900. The closed end 30 of the filter element 20 can be formed by wrapping an open sleeve with heat resistant tape or wire, or the sleeve can be braided, woven or otherewise formed with one one closed as illustrated in Figure 1.

The deflector plate 18 can be a piece of metal formed in an angle or V in cross-section, as shown in Figure 2, and welded to the cylindrical adapter 12. The deflector plate 18 preferably extends, as shown, at least as far outwardly from the end of the adapter 12 as the filter element 20 and prevents the gas flow, as represented by arrows F, from impinging directly against the filter element 20.

In operation, the filter assembly 10 is threaded onto the end of an analyser probe 14 installed in a gas duct, and is positioned so that the gas flow F strikes the apex of the V-shaped deflector plate 18 and flows around the flexible filter element 20. As the gas flows past the legs of the deflector plate 18 and along the filter element 20, currents are set up which cause the filter element 20 to deflect upwardly and downwardly so as to flutter causing the fabric which forms the filter to constantly flex as it filters out particulate matter from the gas being drawn in by the analyser probe 14, thus dislodging particles which tend to be trapped within the fibres of the fabric of the filter element.

When the analyser system is backflushed by means of a fluid flowing outwardly through the analyser probe 14, the fluid pressure which tends to build up within the filter element 20 causes the element to bulge which opens the interstices within the fabric to dislodge any particulate matter which may still be trapped in the filter element during normal operation of the element.

**Claims**

1. A gas sampling system for analysing gases within a duct, the system including a probe (14) for withdrawing a sample of gas from the duct for analysis and a filter attached to the probe and operable to filter the gas drawn into the probe, characterised in that the filter is in the form of a filter assembly (10) comprising an adapter (12) attached to the probe (14), a tubular extension (16) attached to the adapter and in communication with the probe, a coil spring (19) having one end in surrounding relation to the tubular extension (16), and a filter element (20) comprising a flexible sleeve that is received over the coil spring (19) and is attached at one end to the tubular extension (16), the sleeve being formed of a temperature resistant ceramic material and being closed at the other end (30).

2. A system according to claim 1, wherein the sleeve is formed of a fabric comprising alumina-boria-silica filaments.

3. A system according to claim 1 or claim 2, wherein the length of the sleeve is substantially greater than its diameter, the sleeve being secured at its one, open end to the tubular extension (16) by means (28) wrapped around the sleeve adjacent its one, open end.

4. A system according to claim 1, claim 2 or claim 3, including deflector means (18) attached to the adapter (12) upstream of the filter element (20) with respect to the gas flow occurring, in use, in the duct and operable to shield the filter element from impingement thereon of matter entrained in the gas flow.

5. A system according to claim 4, wherein the deflector means comprises a plate (18) which is V-shaped in cross-section and disposed with the apex of the V facing away from the filter element (20).

6. A system according to claim 5, wherein the plate (18) is spaced upstream of the filter element (20) with respect to said gas flow.

7. A system according to any one of the preceding claims, including a probe support (26) in surrounding relation to the probe (14), the adapter (12) comprising a cylindrical member having a threaded bore (22) formed therein for engagement with the probe and a counterbore (24) formed in one end thereof, the probe support (26) being received within the counterbore (24).

8. A system according to claim 7, wherein the tubular extension (16) is received in the threaded bore (22).

**Revendications**

1. Système d'échantillonnage de gaz pour l'analyse de gaz aà l'intérieur d'un conduit, le système comprenant une sonde (14) servant à retirer un échantillon de gaz du conduit pour l'analyse et un filtre fixé à la sonde et capable de filtrer le gaz aspiré dans la sonde, caractérisé par le fait que le filtre est sous la forme d'un ensemble de filtre (10) comprenant un adapteur (12) fixé à la sonde (14), un prolongement tubulaire (16) fixé à l'adapteur et en communication avec la sonde, un ressort à boudin (19) présentant une extrémité entourant le prolongement tubulaire (16) et un élément de filtre (20) comprenant un manchon flexible qui se place par dessus le ressort à boudin (19) et est fixé par une extrémité au prolongement tubulaire (16), le manchon étant formé d'une matière céramique résistant à la température et étant fermé à l'autre extrémité (30).

2. Système selon la revendication 1, dans lequel le manchon est formé d'une étoffe comprenant des filaments d'alumine-oxyde de bore-silice.

3. Système selon la revendication 1 ou la revendication 2, dans lequel la longueur du manchon est notablement supérieure à son diamètre, le manchon étant fixé par l'une de ses extrémités, ouverte, au prolongement tubulaire (16) par des moyens (28) enroulés autour du manchon auprès de son extrémité ouverte.

4. Système selon la revendication 1, la revendication 2 ou la revendication 3, comprenant des moyens déflecteurs (18) fixé à l'adapteur (12) en amont de l'élément de filtre (20), relativement à l'écoulement de gaz qui se produit en service dans le conduit, et capables de protéger l'élément de filtre en l'empêchant d'être frappé par de la matière entraînée dans le courant de gaz.

5. Système selon la revendication 4, dans lequel les moyens déflecteurs constituent une plaque (18) qui a une section en V et est disposée de telle sorte que le sommet du V est tourné à l'opposé de l'élément de filtre (20).

6. Système selon la revendication 5, dans lequel la plaque (18) est espacée en amont de l'élément de filtre (20), relativement à l'écoulement de gaz.

7. Système selon l'une quelconque des revendications précédentes, comprenant un support de sonde (26) entourant la sonde (14) l'adapteur (12) constituant un élément cylindrique présentant une perforation filetée (22) formée dedans pour l'adaptation à la sonde et un alésage (24) formé dans une extrémité de cet élément, le support de sonde (26) se logeant à l'intérieur de l'alésage (24).

8. Système selon la revendication 7, dans lequel le prolongement tubulaire (16) se loge dans la perforation filetée (22).

**Patentansprüche**

1. System zur Gasprobennahme zum Analysieren von Gasen in einer Rohrleitung, wobei das System eine Sonde (14) zum Abziehen einer Gasprobe aus der Rohrleitung für die Analyse und ein an der Sonde befestigtes Filter, mit welchem das in die Sonde gezogene Gas filterbar ist, besitzt, dadurch gekennzeichnet, daß das Filter in der Form einer Filteranordnung (10) vorliegt, die einen an der Sonde (14) befestigten Adapter (12), eine an dem Adapter befestigte und in Verbindung mit der Sonde stehende rohrförmige Verlängerung (16), eine mit einem Ende die rohrförmige Verlängerung (16) umgebende Schraubenfeder (19) und ein Filterelement (20) aufweist, welches eine flexible Hülse besitzt, die über der Schraubenfeder (19) liegt und an einem Ende an der rohrförmigen Verlängerung (16) befestigt ist, wobei die Hülse aus einem temperaturbeständigen Keramikmaterial besteht und an dem anderen Ende (30) verschlossen ist.

2. System nach Anspruch 1, bei dem die Hülse aus einem Aluminiumoxid-Boroxid-Kieselsäure-Fäden umfassenden Gewebe gebildet ist.

3. System nach Anspruch 1 oder Anspruch 2, bei dem die Länge der Hülse wesentlich größer als ihr Durchmesser ist, wobei die Hülse an ihrem einen offenen Ende an der rohrförmigen Verlängerung (16) mit Mitteln (28) befestigt ist, die nahe ihrem einen offenen Ende um die Hülse gewickelt sind.

4. System nach Anspruch 1, Anspruch 2 oder Anspruch 3 mit Ablenkeinrichtungen (18), die an dem Adapter (12) aufstromwärts von dem Filterelement (20) in Bezug auf den bei der Verwendung auftretenden Gasstrom in der Rohrleitung befestigt sind und das Filterelement gegen das Auftreffen von in dem Gasstrom mitgerissenem Material abschirmen.

5. System nach Anspruch 4, bei dem die Ablenkeinrichtungen eine Platte (18) besitzen, die V-förmigen Querschnitt besitzt und mit der Spitze des V von dem Filterelement (20) abgewandt angeordnet ist.

6. System nach Anspruch 5, bei dem die Platte (18) von dem Filterelement (20) aufstromwärts bezüglich des Gasstromes beabstandet ist.

7. System nach einem der vorausgehenden Ansprüche mit einem Sondenträger (26), der die Sonde (14) umgibt, wobei der Adapter (12) ein zylindrisches Teil besitzt, welches eine darin ausgebildete, mit Gewinde versehene Bohrung (22) zum Eingriff mit der Sonde und eine in ihrem einen Ende ausgebildete Gegenbohrung (24) be-• sitzt und wobei der Sondenträger (26) von der Gegenbohrung (24) aufgenommen wird.

8. System nach Anspruch 7, bei dem die rohrförmige Verlängerung (16) von der mit Gewinde versehenen Bohrung (22) aufgenommen wird.

FIG. 2

FIG. 1

0039 380